# EUROPEAN PATENT APPLICATION

(11) **EP 4 773 570 A1**
(43) Date of publication of application: **08.07.2026**
(21) Application number: 24870532.9
(22) Date of filing: 18.09.2024
(51) Int. Cl.: H04L 49/10

(54) **PROCESSING AND SWITCHING DIE, COMMUNICATION CHIP, AND DATA PROCESSING APPARATUS AND METHOD**

(30) Priority: 27.09.2023 CN 202311282067
(71) Applicant: HUAWEI TECHNOLOGIES CO., LTD., Shenzhen, Guangdong 518129 (CN)
(72) Inventor: ZHANG, Xianfu, Shenzhen, Guangdong 518129 (CN)
(74) Representative: MERH-IP Matias Erny Reichl Hoffmann Patentanwälte PartG mbB
(86) International application number: PCT/CN2024/119487
(87) International publication number: WO 2025/066988

(57) **Abstract**

A processing and switching die, a communication chip, a data processing apparatus, and a method are disclosed, and relate to the field of communication technologies, to greatly reduce a quantity of processing units in a device, reduce device costs, improve device energy efficiency, and reduce heat dissipation and power supply costs and deployment space. A communication chip is provided. The communication chip includes a processing and switching die and a plurality of network processing dies coupled to the processing and switching die. The processing and switching die includes at least one processing unit and a plurality of switching units. The at least one processing unit is configured to: control and manage the plurality of switching units and the plurality of network processing dies. The plurality of network processing dies are configured to provide capabilities such as a network interface and network processing.

## Description

This application claims priority to Chinese Patent Application No. 202311282067.4, filed with the China National Intellectual Property Administration on September 27, 2023, and entitled "PROCESSING AND SWITCHING DIE, COMMUNICATION CHIP, DATA PROCESSING APPARATUS, AND METHOD", which is incorporated herein by reference in its entirety.

### TECHNICAL FIELD

This application relates to the field of communication technologies, and in particular, to a processing and switching die, a communication chip, a data processing apparatus, and a method.

### BACKGROUND

Currently, a data processing apparatus like a router (router), a switch, or a system on chip (system on chip, SoC) used in a router and a switch usually includes a plurality of different functional modules. Each functional module includes one processing unit configured to: configure and manage a hardware module, and processing units in different functional modules jointly implement a control and management function of the data processing apparatus.

For example, a router is used as an example. The router may include a main processing unit (main processing unit, MPU), a switch fabric unit (switch fabric unit, SFU), and a line processing unit (line processing unit, LPU). The MPU, the SFU, and the LPU each include a central processing unit (central processing unit, CPU). Each CPU is configured to: configure and manage a module in which the CPU is located. The CPU in the MPU manages the CPU in the SFU and the CPU in the LPU according to a multi-level management policy.

However, CPU resources in the different functional modules cannot be shared, and consequently a large quantity of CPUs needs to be consumed. In addition, the data processing apparatus has problems of high power consumption, high costs, and a large size.

### SUMMARY

This application provides a processing and switching die, a communication chip, a data processing apparatus, and a method, and relates to the field of communication technologies, to greatly reduce a quantity of processing units in a device, reduce device costs, improve device energy efficiency, and reduce heat dissipation and power supply costs and deployment space.

To achieve the foregoing objectives, the following technical solutions are used in embodiments of this application.

According to a first aspect, a processing and switching die is provided, and may be used in a communication chip. The processing and switching die is configured to be coupled to a plurality of network processing dies in the communication chip. The die may also be referred to as a bare die or an unencapsulated die. The processing and switching die includes at least one processing unit and a plurality of switching units. The at least one processing unit is configured to: control and manage the plurality of switching units and the plurality of network processing dies. The plurality of switching units may be configured to provide a data exchange function. The plurality of network processing dies may be configured to provide capabilities such as a network interface and network processing. The control and management may include control and management of a control plane and/or a management plane.

In the foregoing technical solution, the processing and switching die may be configured to: control and manage the plurality of switching units and the plurality of network processing dies, and provide a computing capability. The plurality of network processing dies may be configured to provide capabilities such as a network interface and network processing. Therefore, based on the processing and switching die, a network-centric computing (where a network capability is primary and computational power is auxiliary) communication chip may be provided. The communication chip may be used in a network device centered on a network processing capability, and can greatly reduce a quantity of processing units in the network device, thereby reducing device costs, improving device energy efficiency, reducing heat dissipation and power supply costs and deployment space, and achieving green, low-carbon, and sustainable development.

In a possible implementation of the first aspect, the at least one processing unit includes one processing unit, and the plurality of switching units are all coupled to the processing unit. The processing unit is configured to send first control and management information to the plurality of switching units. The processing unit is further configured to send second control and management information to the plurality of network processing dies through the plurality of switching units. In the foregoing possible implementation, a centralized processing unit is disposed in the processing and switching die, and the processing unit controls and manages the plurality of switching units and the plurality of network processing dies, so that a quantity of processing units can be greatly reduced.

In a possible implementation of the first aspect, a first switching unit in the plurality of switching units is directly connected to a first network processing die in the plurality of network processing dies. The processing unit is further configured to send the second control and management information to the first network processing die through the first switching unit. In the foregoing possible implementation, the first switching unit is directly connected to the first network processing die, and the processing unit sends the second control and management information to the first network processing die through the first switching unit, so that the first network processing die can be controlled and managed.

In a possible implementation of the first aspect, a second network processing die in the plurality of network processing dies is directly connected to the first network processing die, and the second network processing die is not directly connected to the plurality of switching units. The processing unit is further configured to send the second control and management information to the second network processing die through the first switching unit and the first network processing die. In the foregoing possible implementation, the first switching unit is directly connected to the first network processing die, and the second network processing die is directly connected to the first network processing die. The processing unit sends the second control and management information to the second network processing die through the first switching unit and the first network processing die, so that the second network processing die can be controlled and managed.

In a possible implementation of the first aspect, a second switching unit in the plurality of switching units is directly connected to a third network processing die in the plurality of network processing dies, and the third network processing die is directly connected to the second network processing die. The processing unit is further configured to send the second control and management information to the second network processing die through the second switching unit and the third network processing die. In the foregoing possible implementation, the second switching unit is directly connected to the third network processing die, and the third network processing die is directly connected to the second network processing die. The processing unit sends the second control and management information to the second network processing die through the second switching unit and the third network processing die, so that the second network processing die can also be controlled and managed.

In a possible implementation of the first aspect, the processing unit is further configured to: distribute and send the second control and management information to the second network processing die through the first switching unit and the second switching unit. In the foregoing possible implementation, when there are at least two paths for the second control and management information of a network processing die, the processing unit distributes and sends the second control and management information to the network processing die for sending, so that control and management flexibility can be improved, and load balancing of the at least two paths can be ensured.

In a possible implementation of the first aspect, the at least one processing unit includes a plurality of processing units, the plurality of processing units and the plurality of switching units are in a one-to-one correspondence and are integrated into a plurality of processing and switching units, and any two of the plurality of processing and switching units are coupled. The plurality of processing and switching units are configured to send second control and management information to the plurality of network processing dies. In the foregoing possible implementation, the plurality of processing units are disposed in the processing and switching die in a distributed manner, the plurality of processing units are in the one-to-one correspondence with the plurality of switching units and are integrated into the plurality of processing and switching units, and the plurality of network processing dies are controlled and managed through the plurality of processing and switching units. This can greatly reduce a quantity of processing units, improve control and management flexibility, and ensure load balancing of the plurality of processing and switching units.

In a possible implementation of the first aspect, a first processing and switching unit in the plurality of processing and switching units is directly connected to a first network processing die in the plurality of network processing dies. The first processing and switching unit is configured to send the second control and management information to the first network processing die. In the foregoing possible implementation, the first processing and switching unit is directly connected to the first network processing die, and the first processing and switching unit sends the second control and management information to the first network processing die, so that the first network processing die can be controlled and managed.

In a possible implementation of the first aspect, a second network processing die in the plurality of network processing dies is directly connected to the first network processing die, and the second network processing die is not directly connected to the plurality of processing and switching units. The first processing and switching unit is further configured to send the second control and management information to the second network processing die through the first network processing die. In the foregoing possible implementation, the first processing and switching unit is directly connected to the first network processing die, the second network processing die is directly connected to the first network processing die, and the first processing and switching unit sends the second control and management information to the second network processing die through the first network processing die, so that the second network processing die can be controlled and managed.

In a possible implementation of the first aspect, a second processing and switching unit in the plurality of processing and switching units is directly connected to a third network processing die in the plurality of network processing dies, and the third network processing die is directly connected to the second network processing die. The second processing and switching unit is further configured to send the second control and management information to the second network processing die through the third network processing die. In the foregoing possible implementation, the second processing and switching unit is directly connected to the third network processing die, the second network processing die is directly connected to the third network processing die, and the second processing and switching unit sends the second control and management information to the second network processing die through the third network processing die, so that the second network processing die can also be controlled and managed.

Optionally, when there are at least two paths for the second control and management information of a network processing die, different processing and switching units in the plurality of processing and switching units may also distribute and send the second control and management information to the network processing die, so that control and management flexibility can be improved, and load balancing of the at least two paths can be ensured.

In a possible implementation of the first aspect, the plurality of processing and switching units include the first processing and switching unit and the second processing and switching unit. A processing unit in the first processing and switching unit is configured to send the second control and management information to a processing unit in the second processing and switching unit. In the foregoing possible implementation, any one of the plurality of processing and switching units may reuse a processing unit in another processing and switching unit, so that performance of the processing and switching die can be improved, and normal execution of a control and management function can still be ensured when a processing and switching die is faulty.

In a possible implementation of the first aspect, the plurality of processing and switching units include the first processing and switching unit and the second processing and switching unit. The processing unit in the first processing and switching unit is further configured to send first control and management information to a switching unit in the second processing and switching unit. In the foregoing possible implementation, any one of the plurality of processing and switching units may reuse a switching unit in another processing and switching unit, so that performance of the processing and switching die can be improved, and normal execution of a control and management function can still be ensured when a processing and switching die is faulty.

According to a second aspect, a communication chip is provided. The communication chip includes at least one processing and switching die and a plurality of network processing dies coupled to the at least one processing and switching die. The at least one processing and switching die is the processing and switching die provided in the first aspect or the first aspect.

In a possible implementation of the second aspect, the at least one processing and switching die includes a first processing and switching die and a second processing and switching die, and the first processing and switching die is directly connected to the second processing and switching die.

According to a third aspect, a data processing apparatus is provided. The data processing apparatus includes a backplane and at least one communication chip disposed on the backplane. The communication chip is the communication chip provided in the second aspect or any possible implementation of the second aspect.

According to a fourth aspect, a control and management method is provided, and is applied to a communication chip, where the communication chip includes a processing and switching die and a plurality of network processing dies coupled to the processing and switching die. The processing and switching die includes at least one processing unit and a plurality of switching units. The method includes: The at least one processing unit sends first control and management information to the plurality of switching units; and the at least one processing unit sends second control and management information to the plurality of network processing dies through the plurality of switching units.

In a possible implementation of the fourth aspect, the first control and management information of each switching unit includes first configuration information used to configure the switching unit, and the second control and management information of each network processing die includes second configuration information used to configure the network processing die.

In a possible implementation of the fourth aspect, the second control and management information further includes transmission control information of a data packet, and the method further includes: Any one of the plurality of network processing dies sends a signaling packet to the at least one processing unit through the plurality of switching units, where the signaling packet is used to trigger the at least one processing unit to send the transmission control information.

In a possible implementation of the fourth aspect, the second control and management information further includes device management information, and the method further includes: Any one of the plurality of network processing dies sends the device status information to the at least one processing unit through the plurality of switching units, where the device status information is used by the at least one processing unit to send the device management information.

In a possible implementation of the fourth aspect, the at least one processing unit includes one processing unit, the plurality of switching units are all coupled to the processing unit, and a first switching unit in the plurality of switching units is directly connected to a first network processing die in the plurality of network processing dies. That the at least one processing unit sends the second control and management information to the plurality of network processing dies through the plurality of switching units includes: The processing unit sends the second control and management information to the first network processing die through the first switching unit.

In a possible implementation of the fourth aspect, a second network processing die in the plurality of network processing dies is directly connected to the first network processing die, and the second network processing die is not directly connected to the plurality of switching units. That the at least one processing unit sends the second control and management information to the plurality of network processing dies through the plurality of switching units further includes: The processing unit sends the second control and management information to the second network processing die through the first switching unit and the first network processing die.

In a possible implementation of the fourth aspect, a second switching unit in the plurality of switching units is directly connected to a third network processing die in the plurality of network processing dies, and the third network processing die is directly connected to the second network processing die. That the at least one processing unit sends the second control and management information to the plurality of network processing dies through the plurality of switching units further includes: The processing unit sends the second control and management information to the second network processing die through the second switching unit and the third network processing die.

In a possible implementation of the fourth aspect, the at least one processing unit includes a plurality of processing units, the plurality of processing units and the plurality of switching units are in a one-to-one correspondence and are integrated into a plurality of processing and switching units, and any two of the plurality of processing and switching units are coupled. That the at least one processing unit sends the second control and management information to the plurality of network processing dies through the plurality of switching units includes: The plurality of processing and switching units send the second control and management information to the plurality of network processing dies.

In a possible implementation of the fourth aspect, a first processing and switching unit in the plurality of processing and switching units is directly connected to a first network processing die in the plurality of network processing dies. That the plurality of processing and switching units send the second control and management information to the plurality of network processing dies includes: The first processing and switching unit sends the second control and management information to the first network processing die.

In a possible implementation of the fourth aspect, a second network processing die in the plurality of network processing dies is directly connected to the first network processing die, and the second network processing die is not directly connected to the plurality of processing and switching units. That the plurality of processing and switching units send the second control and management information to the plurality of network processing dies further includes: The first processing and switching unit sends the second control and management information to the second network processing die through the first network processing die.

In a possible implementation of the fourth aspect, a second processing and switching unit in the plurality of processing and switching units is directly connected to a third network processing die in the plurality of network processing dies, and the third network processing die is directly connected to the second network processing die. That the plurality of processing and switching units send the second control and management information to the plurality of network processing dies further includes: The second processing and switching unit sends the second control and management information to the second network processing die through the third network processing die.

In a possible implementation of the fourth aspect, the plurality of processing and switching units include the first processing and switching unit and the second processing and switching unit. The at least one processing unit sends the first control and management information to the plurality of switching units includes: A processing unit in the first processing and switching unit sends the first control and management information to a switching unit in the second processing and switching unit.

In a possible implementation of the fourth aspect, the control and management information includes control and management information of a control plane and/or a management plane.

According to another aspect of this application, a computer-readable storage medium is provided. The computer-readable storage medium stores a computer program or instructions. When the computer program or the instructions are run, the control and management method provided in the fourth aspect or any possible implementation of the fourth aspect is implemented.

According to another aspect of this application, a computer program product is provided. The computer program product includes a computer program (which may also be referred to as code or instructions). When the computer program is run, a computer is enabled to perform the control and management method provided in the fourth aspect or any possible implementation of the fourth aspect.

It may be understood that, for beneficial effects that can be achieved by any one of the communication chip, the data processing apparatus, the control and management method, the computer-readable storage medium, and the computer program product provided above, refer to the beneficial effects in the control and management method provided above. Details are not described herein again.

### BRIEF DESCRIPTION OF DRAWINGS

FIG. 1 is a diagram of an application scenario of a router according to an embodiment of this application;
FIG. 2 is a diagram of a structure of a network device according to an embodiment of this application;
FIG. 3 is a diagram of a structure of another network device according to an embodiment of this application;
FIG. 4 is a diagram of a front side and a rear side of a network device according to an embodiment of this application;
FIG. 5 is a diagram of control and management in a network device according to an embodiment of this application;
FIG. 6 is a diagram of a structure of a DPU according to an embodiment of this application;
FIG. 7 is a diagram of a structure of another DPU according to an embodiment of this application;
FIG. 8 is a diagram of a structure of a processing and switching die according to an embodiment of this application;
FIG. 9 is a diagram of a structure of another processing and switching die according to an embodiment of this application;
FIG. 10 is a diagram of a structure of still another processing and switching die according to an embodiment of this application;
FIG. 11 is a diagram of a structure of a communication chip according to an embodiment of this application;
FIG. 12 is a diagram of a structure of another communication chip according to an embodiment of this application;
FIG. 13 is a diagram of a structure of another communication chip according to an embodiment of this application;
FIG. 14 is a diagram of a structure of another communication chip according to an embodiment of this application;
FIG. 15 is a diagram of a structure of another communication chip according to an embodiment of this application;
FIG. 16 is a diagram of a structure of another communication chip according to an embodiment of this application;
FIG. 17 is a diagram of a structure of another communication chip according to an embodiment of this application;
FIG. 18 is a diagram of a structure of another communication chip according to an embodiment of this application; and
FIG. 19 is a diagram of a structure of another communication chip according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The specific embodiments discussed are merely illustrative of specific ways to implement and use this description and this technology, and do not limit the scope of this application.

Unless otherwise defined, all technical terms used herein have the same meaning as those commonly known to a person of ordinary skill in the art.

Circuits or other components in embodiments of this application may be described as "being configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not turned on), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, "a plurality of" means two or more, and "and/or" describes an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between the associated objects. The term "at least one of the following items (pieces)" or an expression similar to the term indicates any combination of the items, and includes a single item (piece) or any combination of a plurality of items (pieces). For example, at least one of a, b, or c may indicate: a, b, c, a and b, a and c, b and c, or a, b, and c, where a, b, and c may be singular or plural.

In embodiments of this application, terms such as "first" and "second" are used to distinguish between objects with similar names, functions, or effects. A person skilled in the art may understand that the terms such as "first" and "second" do not limit a quantity and an execution sequence. The term "coupling" indicates an electrical connection, including a direct connection through a wire or a connection end or an indirect connection through another component. Therefore, "coupling" should be considered as a generalized electronic communication connection.

It should be noted that, in this application, the terms such as "example" or "for example" are used to represent giving an example, an illustration, or a description. Any embodiment or design solution described as an "example" or "for example" in this application should not be explained as being more preferred or having more advantages than another embodiment or design solution. To be precise, use of the word such as "example" or "for example" is intended to present a relative concept in a specific manner.

Before embodiments of this application are described, the following first describes related application scenarios in this application.

Currently, a data processing apparatus like a router (router), a switch, or a system on chip (system on chip, SoC) used in a router and a switch usually includes a plurality of different functional modules. Each functional module includes one processing unit configured to: configure and manage a hardware module, and processing units in different functional modules jointly implement a control and management function of the data processing apparatus. The following describes the data processing apparatus by using a router as an example.

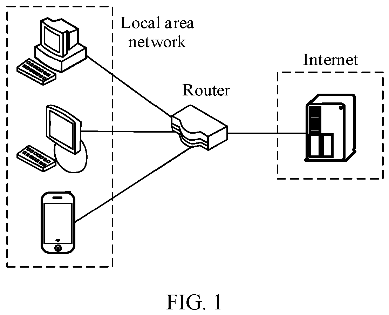

The router (router) is a network device configured to connect two or more networks. For example, as shown in FIG. 1, the router may be configured to connect a local area network and the Internet. The local area network may include terminal devices such as a mobile phone, a tablet computer, and a personal computer. The Internet may include one or more servers. The router functions as a gateway between networks, and can read a destination address in a data packet and determine how to transmit the data packet based on the destination address. The router can identify different network protocols, for example, an Ethernet protocol used by the local area network and a TCP/IP protocol used by the Internet. In this way, the router can analyze destination addresses of data packets transmitted from different types of networks, convert addresses of non-TCP/IP networks into TCP/IP addresses or convert addresses of TCP/IP networks into non-TCP/IP addresses, and then transmit data packets with different destination addresses to specified locations based on an optimal route selected according to a routing algorithm.

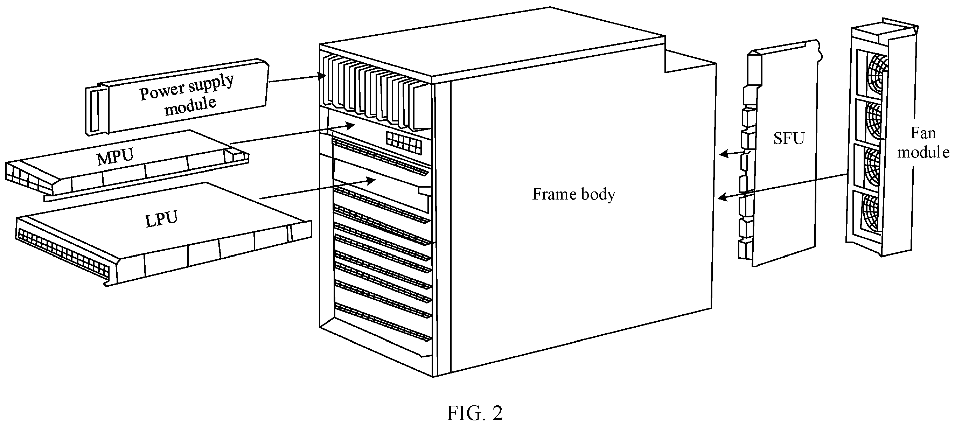

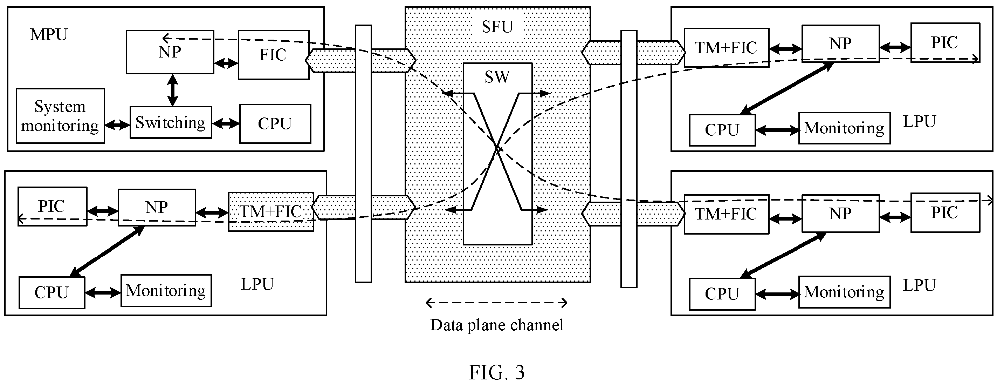

As shown in FIG. 2 and FIG. 3, the network device may include a frame body, and a main processing unit (main processing unit, MPU), a switch fabric unit (switch fabric unit, SFU), a line processing unit (line processing unit, LPU), a power module (power module, PM), and a fan module (fan module, FM) that are mounted on the frame body. The main processing unit MPU and the line processing unit LPU may exchange data through the switch fabric unit SFU (that is, provide a data plane channel). The power module PM may be configured to supply power to the main processing unit MPU, the switch fabric unit SFU, the line processing unit LPU, and the fan module FM. The fan module FM may be configured to provide a heat dissipation function. The line processing unit LPU may also be referred to as a line processing unit. FIG. 3 does not show the frame body, the power module PM, and the fan module FM.

In the router, the main processing unit MPU, the switch fabric unit SFU, and the line processing unit LPU each include a central processing unit (central processing unit, CPU). Each CPU is configured to: configure and manage a module in which the CPU is located, and CPUs in the plurality of modules jointly control and manage the router. The following separately describes functions and structures of the main processing unit MPU, the switch fabric unit SFU, and the line processing unit LPU.

The main processing unit MPU may be configured to be responsible for a control plane and a management plane of an entire system. The control plane may be used to complete functions such as protocol processing, service processing, route computation, forwarding control, service scheduling, traffic statistics collection, and system security of the system. The management plane may be used to complete functions such as running status monitoring, environment monitoring, log and alarm information processing, system loading, and system upgrade of the system. The main processing unit MPU mainly includes a CPU chip and a network processing (network processing, NP) chip. In a possible example, as shown in FIG. 3, the main processing unit MPU may include a network interface (fabric interface, FIC), an NP chip, a switching (switching, SW) unit, a CPU chip, a system monitoring component, and the like. The switching unit may be a local area network switching (lan switching, LSW) unit.

The switch fabric unit SFU may be configured to be responsible for a data plane of the entire system. The data plane may be used to provide a high-speed data channel, to implement a service switching function between service modules. For example, the main processing unit MPU and the line processing unit LPU may communicate with each other through the switch fabric unit SFU. The switch fabric unit SFU mainly includes a CPU chip and a switch (switch, SW) chip. FIG. 3 shows only the SW chip.

The line processing unit LPU is used to provide a data forwarding function, and may further provide interfaces of different types and different rates. For example, the interfaces may include an optical interface and an electrical interface. The line processing unit LPU may forward data through a distributed data plane. The line processing unit LPU mainly includes a CPU chip and an NP chip. In a possible example, as shown in FIG. 3, the line processing unit LPU may include a CPU chip, a network interface FIC, a traffic manager (traffic manager, TM), an NP chip, a peripheral interface (peripheral interface, PIC), a monitoring component, and the like. In the figure, the traffic manager TM and the network interface FIC are represented as TM+FIC.

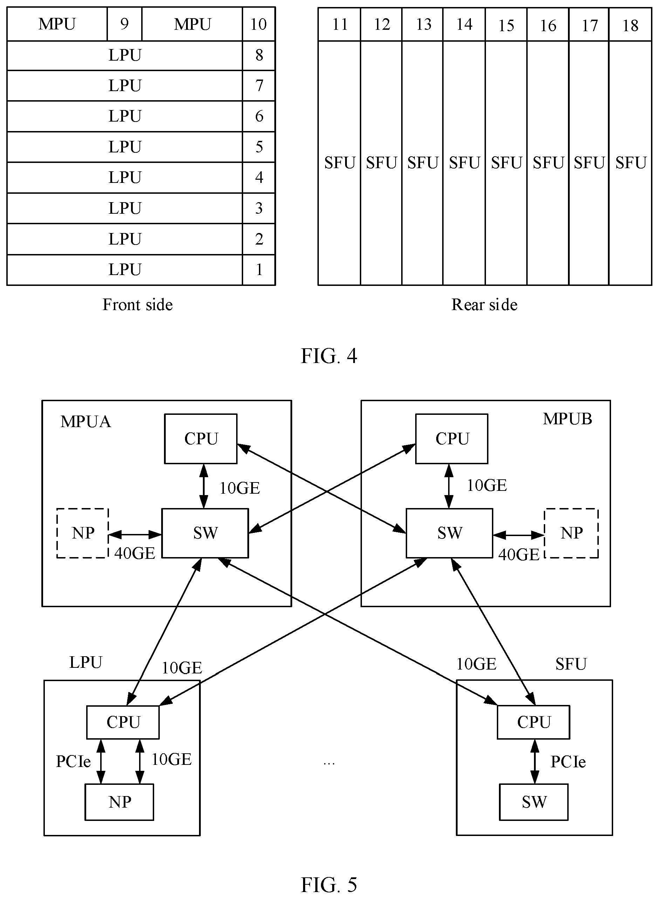

In actual application, a network device may include a plurality of main processing units MPUs, a plurality of switch fabric units SFUs, and a plurality of line processing units LPUs. For example, as shown in FIG. 4, the network device may include two main processing units MPUs, eight switch fabric units SFUs, and eight line processing units LPUs. If each main processing unit MPU includes one CPU chip and one NP chip, each line processing unit LPU includes one CPU chip and one NP chip, and each switch fabric unit includes one CPU chip and one SW chip, the network device needs eighteen CPU chips, ten NP chips, and eight SW chips in total. In FIG. 4, an example in which the two main processing units MPU and the eight line processing units LPUs are mounted on a front side of the network device, and the eight switch fabric units SFU are mounted on a rear side of the network device is used for description.

In the foregoing network device, the CPU chip on the main processing unit MPU centrally manages each line processing unit LPU and each switch fabric unit SFU through the NP chip or the like. Each line processing unit LPU and each switch fabric unit SFU have their own CPUs to be responsible for configuration and management of modules. For example, as shown in FIG. 5, the SW unit in the main processing unit MPU is connected to the CPU chip through an Ethernet interface GE (for example, 10GE), and is connected to the NP chip through 40GE. The CPU chip in the main processing unit MPU manages the CPU chip in the line processing unit LPU and the CPU chip in the switch fabric unit SFU through a high-speed inter-board communication channel in the LSW and 10GE. The CPU chip in the line processing unit LPU manages the NP chip through a PCIe interface, and the CPU chip in the switch fabric unit SFU manages the SW chip through a PCIe interface.

However, CPU resources in the main processing unit MPU, the switch fabric unit SFU, and the line processing unit LPU cannot be shared. Therefore, a large quantity of CPU chips need to be consumed, and the network device also has problems of high power consumption, high costs, and a large size. In addition, deployment space of the network device is wasted to a specific extent.

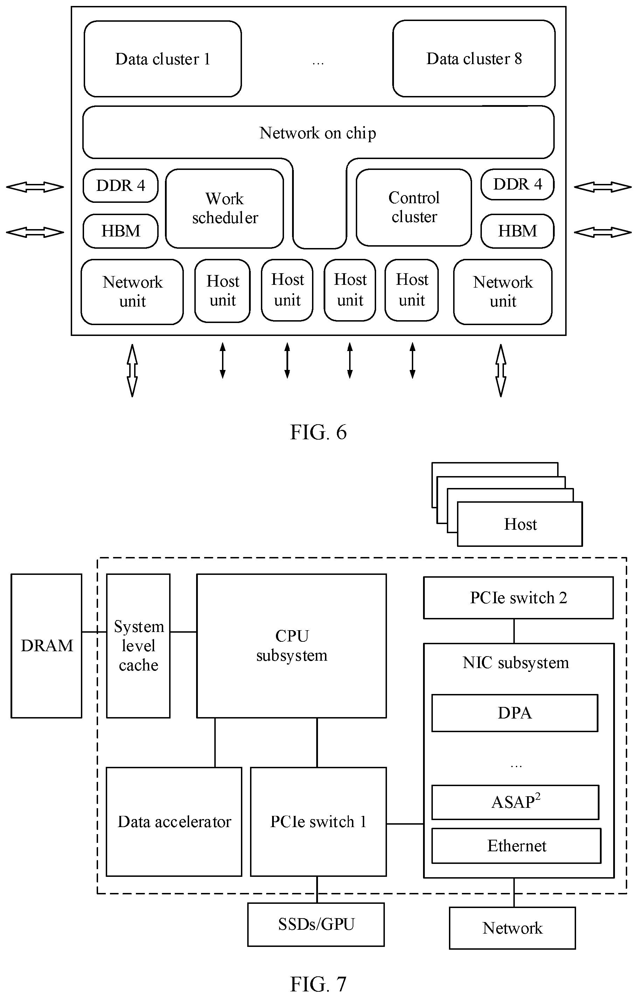

In addition, a data processing unit (data processing unit, DPU) is a data processing apparatus designed and implemented based on a computing-network integrated architecture. A computing cluster and a network unit are mainly integrated into the data processing unit DPU. The computing cluster may be configured to perform data processing, the network unit may be configured to perform data exchange, and the computing cluster and the network unit are further configured to: jointly control and manage the data processing unit DPU. The following describes a structure of the data processing unit DPU by using examples with reference to FIG. 6 and FIG. 7.

In a possible example, as shown in FIG. 6, the data processing unit DPU may include: a plurality of data clusters (data clusters), a network on chip (network on chip), a control cluster (control cluster), a work scheduler (work scheduler), a double data rate random access memory DDR 4, a high bandwidth memory (high bandwidth memory, HBM), a host unit (host unit), and a network unit (network unit). The plurality of data clusters may communicate with another component through the network on chip. The control cluster and the work scheduler may be configured to: control and schedule the data processing unit DPU. The DDR 4 and the HBM may be configured to store data of the data processing unit DPU. The host unit may be configured to support the data processing unit DPU to connect to a host. The network unit may be configured to support the data processing unit DPU in performing data exchange and network processing.

In a possible example, as shown in FIG. 7, the data processing unit DPU may include a CPU subsystem (subsystem), a system level cache (system level cache) coupled to the CPU subsystem, a data accelerator (data accelerator), a PCIe switch (PCIe switch) 1, a PCIe switch 2, and a network interface card (network interface card, NIC) subsystem coupled to the PCIe switch 1 and the PCIe switch 2. In addition, the system level cache may be further coupled to a DRAM. The PCIe switch 1 may be further coupled to a solid state drive (SSDs) or a graphics processing unit (GPU), where the SSDs and the GPU are represented as SSDs/GPU. The NIC subsystem may include a network interface (for example, an Ethernet (ethernet) interface or an InfiniBand (infiniband) interface), a data path accelerator (data path accelerator, DPA), an accelerated switch and packet processing (accelerated switch and packet processing, ASAP2) module, and the like. The network interface may be configured to connect to a network. The PCIe switch 2 may be further connected to a host (host).

The several data processing units DPUs provided above are all based on computing-centric network, namely, a computing and network integrated architecture in which computational power is primary and a network capability is auxiliary. Therefore, the data processing unit DPU has specific restrictions on capabilities such as a network interface and network processing, and is not applicable to a network device based on a network processing capability.

In view of this, an embodiment of this application provides a network-centric computing (that is, a network capability is primary and computational power is auxiliary) communication chip. The communication chip includes a processing and switching die and a plurality of NP dies. The processing and switching die may be configured to: control and manage the communication chip and provide a computing capability. The plurality of NP dies may be configured to provide capabilities such as a network interface and network processing. Therefore, the communication chip provided in this embodiment of this application is applicable to a network device based on a network processing capability. In comparison with the conventional technology, a quantity of processing units in a network device can be greatly reduced, device costs are reduced, device energy efficiency is improved, and heat dissipation and power supply costs and deployment space are reduced, to achieve green, low-carbon, and sustainable development.

The following describes specific content of the processing and switching die and the communication chip provided in embodiments of this application.

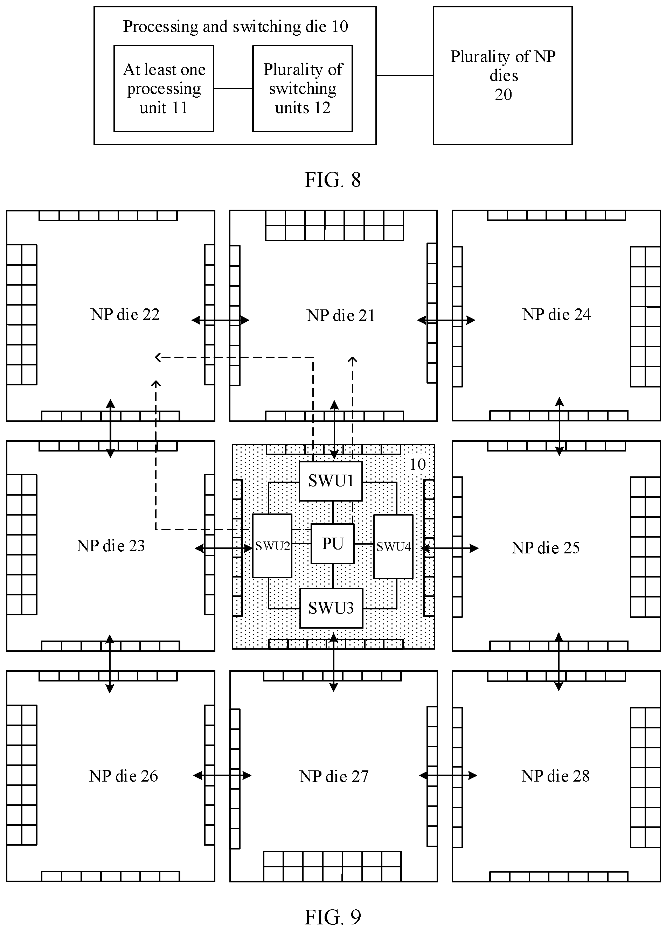

FIG. 8 is a diagram of a structure of a processing and switching die according to an embodiment of this application. The processing and switching die 10 may be configured to be coupled to a plurality of NP dies 20. For example, any one of the plurality of NP dies 20 may be directly coupled to the processing and switching die 10, or may be indirectly coupled to the processing and switching die 10 through another NP die.

The die may also be referred to as a bare die or an unencapsulated die. Therefore, the processing and switching die 10 may also be referred to as a processing and switching bare die or a processing and switching unencapsulated die, and the plurality of NP dies 20 may also be referred to as a plurality of NP bare dies or a plurality of NP unencapsulated dies. Optionally, the processing and switching die 10 and the plurality of NP dies 20 may be a plurality of independent dies cut from a wafer (wafer), or may be a plurality of uncut dies located on a same wafer.

Optionally, in actual application, the plurality of NP dies 20 may alternatively be replaced with other dies, and are used in another device other than a network device like a router or a switch. In a possible example, the other dies may include but are not limited to: image processing dies, signal processing dies, neural network processing dies, and the like. This is not specifically limited in embodiments of this application, and the plurality of NP dies are used as an example for description in this specification.

In embodiments of this application, the processing and switching die 10 may include at least one processing unit (processing unit, PU) 11 and a plurality of switching units (switching units, SWUs) 12. The plurality of switching units 12 are coupled to the at least one processing unit 11, and the at least one processing unit 11 may be configured to: control and manage the plurality of switching units 12 and the plurality of NP dies 20. The control and management may include control and management of a control plane and/or a management plane. The control and management manner may be referred to as a processing unit single-level management and compute resource sharing manner.

For example, the at least one processing unit 11 may be configured to: control and manage functions such as protocol processing, service processing, route computation, packet forwarding, and traffic statistics collection of the plurality of switching units 12 and the plurality of NP dies 20, and may be further configured to: control and manage functions such as running status monitoring, environment monitoring, log and alarm information processing, system loading, and system upgrade of the communication chip.

Optionally, a processing unit in the at least one processing unit 11 may include but is not limited to a central processing unit (central processing unit, CPU), a digital signal processing unit (digital signal processor, DSP), a neural network processing unit (neural processing unit, NPU), a graphics processing unit (graphic processing unit, GPU), an image signal processor (image signal processor, ISP), a microcontroller or microprocessor, an application-specific integrated circuit, a field programmable gate array, another programmable logic device, or the like.

In a possible embodiment, as shown in FIG. 9, the at least one processing unit 11 in the processing and switching die 10 includes one processing unit PU, and the plurality of switching units 12 are all coupled to the processing unit. For example, the plurality of switching units 12 include four switching units, and are represented as a switching unit SWU1 to a switching unit SWU4. The switching unit SWU1 to the switching unit SWU4 are all coupled to the processing unit PU. In FIG. 9, an example in which the plurality of NP dies 20 include eight NP dies and are represented as an NP die 21 to an NP die 28 is used for description.

The processing unit PU is configured to send first control and management information to the plurality of switching units 12, that is, send, to each of the plurality of switching units 12, first control and management information corresponding to the switching unit, so as to control and manage the switching unit based on the first control and management information. For example, the processing unit PU may be configured to send the first control and management information to each switching unit of the switching unit SWU1 to the switching unit SWU4.

For example, the first control and management information may specifically include at least one of the following information: first configuration information used to configure the switching unit, transmission control information of a data packet, and device management information sent based on a plurality of pieces of received device status information. The transmission control information of the data packet may be obtained based on a configuration, or may be generated based on triggering of a signaling packet. The signaling packet may be received by the NP die from the outside and forwarded to the processing unit PU through the switching unit. The plurality of pieces of device status information may be status information of devices monitored by the NP die, a fan module coupled to the NP die, a power supply module, and the like. The device status information may also be referred to as maintenance information.

The processing unit PU is further configured to send second control and management information to the plurality of NP dies 20 through the plurality of switching units 12, that is, send, to each of the plurality of NP dies 20, second control and management information corresponding to the NP die, so as to control and manage the NP die based on the second control and management information. For example, the second control and management information may include at least one of the following information: second configuration information used to configure the NP die, transmission control information of a data packet, and device management information sent based on a plurality pieces of received device status information. The transmission control information of the data packet may be obtained based on a configuration, or may be generated based on triggering of a signaling packet. The signaling packet may be received by the NP die from the outside and forwarded to the processing unit PU through the switching unit. The plurality of pieces of device status information may be status information of devices monitored by the NP die, a fan module coupled to the NP die, a power supply module, and the like. The device status information may also be referred to as maintenance information.

For example, the configuration may include configuration, debugging, and query of operation data, and is specifically used to configure a register, entry space, and the like of the switching unit and the NP die. The signaling packet may include a routing protocol packet. Because the signaling packet cannot be directly used by a data plane to guide forwarding, the signaling packet needs to be first parsed by the at least one processing unit 11 before being identified by the data plane. For example, when the signaling packet is used for route computation, the at least one processing unit 11 may deliver a destination IP address and a next-hop address to a routing table of the NP die, so that the data packet is forwarded based on the destination IP address and the next-hop address in the routing table.

In an example, if the switching unit SWU1 in the plurality of switching units 12 is a first switching unit, and the first switching unit SWU1 is directly connected to a first NP die 21 in the plurality of NP dies 20, that the processing unit PU sends the second control and management information to the first NP die 21 may be specifically as follows: The processing unit PU sends the second control and management information to the first NP die 21 through the first switching unit SWU1. In other words, the processing unit PU sends the second control and management information to the first switching unit SWU1; and when receiving the second control and management information, the first switching unit SWU1 sends the second control and management information to the first NP die 21.

In another example, if a second NP die 22 in the plurality of NP dies 20 is directly connected to a first NP die 21, and the second NP die 22 is not directly connected to the plurality of switching units 12, that the processing unit PU sends, to the second NP die 22, second control and management information corresponding to the second NP die 22 may be specifically as follows: The processing unit PU sends the second control and management information to the second NP die 22 through the first switching unit SWU1 and the first NP die 21. In other words, the processing unit PU sends the second control and management information to the first switching unit SWU1; when receiving the second control and management information, the first switching unit SWU1 sends the second control and management information to the first NP die 21; and when receiving the second control and management information, the first NP die 21 sends the second control and management information to the second NP die 22.

In another example, if the switching unit SWU2 in the plurality of switching units 12 is a second switching unit, the second switching unit SWU2 is directly connected to a third NP die 23 in the plurality of NP dies 20, and the third NP die 23 is directly connected to a second NP die 22, that the processing unit PU sends, to the second NP die 22, the second control and management information corresponding to the second NP die 22 may be specifically as follows: The processing unit PU sends the second control and management information to the second NP die 22 through the second switching unit SWU2 and the third NP die 23. In other words, the processing unit PU sends the second control and management information to the second switching unit SWU2; when receiving the second control and management information, the second switching unit SWU2 sends the second control and management information to the third NP die 23; and when receiving the second control and management information, the third NP die 23 sends the second control and management information to the second NP die 22.

Optionally, when there are a plurality of paths for sending the second control and management information corresponding to an NP die, the processing unit PU may distribute the second control and management information to at least two of the plurality of paths for sending, or may send the second control and management information by specifying one of the plurality of paths.

For example, the processing unit PU sends, to the second NP die 22, the second control and management information corresponding to the second NP die 22. The processing unit PU may be configured to: distribute and send the second control and management information to the second NP die 22 through a first path in which the first switching unit SWU1 and the first NP die 21 are located and a second path in which the second switching unit SWU2 and the third NP die 23 are located.

When the processing unit PU distributes and sends, through at least two paths, the second control and management information corresponding to the second NP die 22, the processing unit PU may distribute and send the second control and management information through load balancing, or may adaptively distribute and send the second control and management information based on transmission statuses of different paths. This is not specifically limited in embodiments of this application.

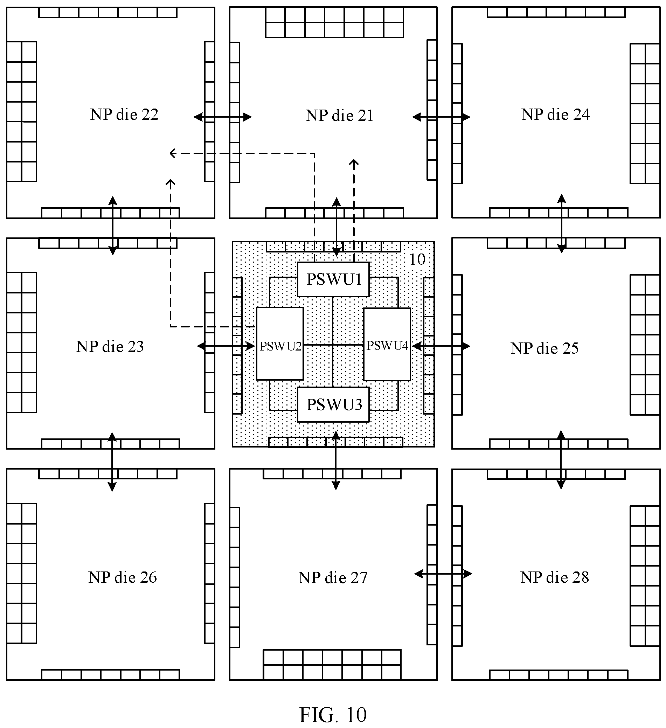

In another possible embodiment, as shown in FIG. 10, the at least one processing unit 11 in the processing and switching die 10 includes a plurality of processing units, the plurality of processing units and the plurality of switching units 12 are in a one-to-one correspondence and are integrated into a plurality of processing and switching units, and any two of the plurality of processing and switching units are coupled. For example, the plurality of processing and switching units include four processing and switching units, and are represented as a processing and switching unit PSWU1 to a processing and switching unit PSWU4. Any two of the processing and switching unit PSWU1 to the processing and switching unit PSWU4 are directly connected to each other. In FIG. 10, an example in which the plurality of NP dies 20 include eight NP dies and are represented as the NP die 21 to the NP die 28 is used for description.

The plurality of processing and switching units (for example, the processing and switching unit PSWU1 to the processing and switching unit PSWU4) are configured to send second control and management information to the plurality of NP dies 20. Specifically, a plurality of processing units in the plurality of processing and switching units may be configured to send the second control and management information to the plurality of NP dies 20. The plurality of processing units in the plurality of processing and switching units may be further separately configured to send first control and management information to corresponding switching units, to control and manage the corresponding switching units.

For example, the second control and management information may specifically include but is not limited to: second configuration information used to configure the NP die, transmission control information of a data packet, and device management information sent based on a plurality of pieces of received device status information. The transmission control information of the data packet may be obtained based on a configuration, or may be generated based on triggering of a signaling packet. The signaling packet may be received by the NP die from the outside and sent to the plurality of processing and switching units. The plurality of pieces of device status information may be status information of devices monitored by the NP die, a fan module coupled to the NP die, a power supply module, and the like. The device status information may also be referred to as maintenance information.

In an example, if the processing and switching unit PSWU1 in the plurality of processing and switching units is a first processing and switching unit, and the first processing and switching unit PSWU1 is directly connected to a first NP die 21 in the plurality of NP dies 20, the first processing and switching unit PSWU1 may be configured to send the second control and management information to the first NP die 21. Specifically, a processing unit in the first processing and switching unit PSWU1 may send the second control and management information to the first NP die 21.

In another example, if a second NP die 22 in the plurality of NP dies 20 is directly connected to a first NP die 21, and the second NP die 22 is not directly connected to the plurality of processing and switching units, that the first processing and switching unit PSWU1 sends, to the second NP die 22, the second control and management information corresponding to the second NP die 22 may include: The first processing and switching unit PSWU1 sends the second control and management information to the second NP die 22 through the first NP die 21. For example, a processing unit in the first processing and switching unit PSWU1 may send the second control and management information to the second NP die 22 through the first NP die 21.

In another example, if the processing and switching unit PSWU2 in the plurality of processing and switching units is a second processing and switching unit, the second processing and switching unit PSWU2 is directly connected to a third NP die 23 in the plurality of NP dies 20, and the third NP die 23 is directly connected to a second NP die 22, the second processing and switching unit PSWU2 may be configured to send the second control and management information to the second NP die 22 through the third NP die 23.

Optionally, any one of the plurality of processing and switching units may further reuse a processing unit or a switching unit in another processing and switching unit.

For example, for the first processing and switching unit PSWU1 and the second processing and switching unit PSWU2, the processing unit in the first processing and switching unit PSWU1 may be configured to: generate second control and management information that needs to be sent by the processing unit in the second processing and switching unit PSWU2, and send the second control and management information to the processing unit in the second processing and switching unit PSWU2. In other words, the processing unit in the second processing and switching unit PSWU2 may reuse the processing unit in the first processing and switching unit PSWU1 to generate the second control and management information.

Alternatively, for the first processing and switching unit PSWU1 and the second processing and switching unit PSWU2, the processing unit in the first processing and switching unit PSWU1 may be further configured to send the second control and management information to a switching unit in the second processing and switching unit PSWU2. In other words, the processing unit in the first processing and switching unit PSWU1 may reuse the switching unit in the second processing and switching unit PSWU2 to send the second control and management information.

Optionally, when there are a plurality of paths for sending second control and management information corresponding to an NP die, the plurality of processing and switching units may distribute the second control and management information to at least two of the plurality of paths for sending, or may send the second control and management information by specifying one of the plurality of paths.

For example, the second control and management information corresponding to the second NP die 22 is sent to the second NP die 22. The first processing and switching unit PSWU1 distributes and sends the second control and management information to the second NP die 22 through a first path on which the first NP die 21 is located, and the second processing and switching unit PSWU2 distributes and sends the second control and management information to the second NP die 22 through a second path on which the third NP die 23 is located.

When the plurality of processing and switching units distribute and send, through at least two paths, the second control and management information corresponding to the second NP die 22, the plurality of processing and switching units may distribute and send the second control and management information through load balancing, or may adaptively distribute and send the second control and management information based on transmission statuses of different paths. This is not specifically limited in embodiments of this application.

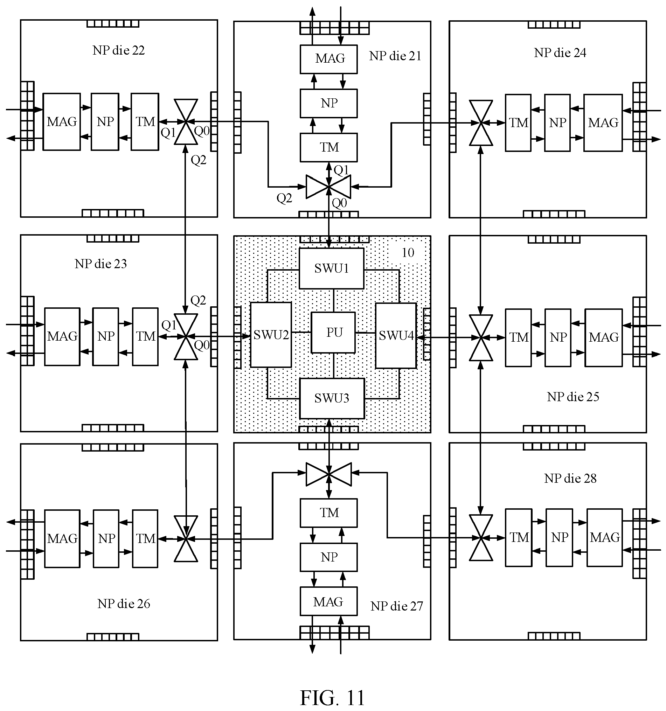

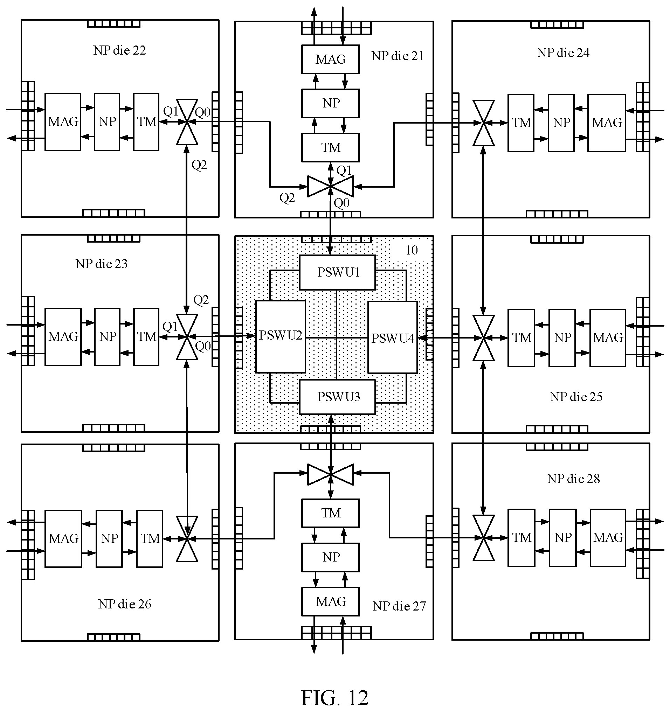

Further, as shown in FIG. 11 and FIG. 12, any one of the plurality of NP dies 20 may include a selector switch. The first NP die 21 and the second NP die 22 are used as an example. The selector switch may include a connection end Q0 and at least one selection end. For example, the at least one selection end includes a first selection end Q1 and a second selection end Q2. In the first NP die 21, the connection end Q0 of the selector switch is connected to the processing and switching die 10, and the first selection end Q1 and the second selection end Q2 of the selector switch are respectively connected to an external port of the first NP die 21 and the second NP die 22. In the second NP die 22, the connection end Q0 of the selector switch is connected to the first NP die 21, and the first selection end Q1 and the second selection end Q2 of the selector switch are respectively connected to an external port of the second NP die 22 and the third NP die 23. In FIG. 11, an example in which the processing and switching die 10 includes one processing unit PU and a plurality of switching units 12 (for example, the switching unit SWU1 to the switching unit SWU4) is used for description. In FIG. 12, an example in which the processing and switching die 10 includes a plurality of processing and switching units (for example, the processing and switching unit PSWU1 to the processing and switching unit PSWU4) is used for description.

The following describes a control process of a selector switch in the NP die by using an example in which the processing and switching die 10 separately sends the second control and management information to the first NP die 21 and the second NP die 22.

For example, as shown in FIG. 11 and FIG. 12, when the processing and switching die 10 is configured to send the second control and management information to the first NP die 21, the first NP die 21 may control the selector switch in the first NP die 21 to connect the first selection end Q1, so that the processing and switching die 10 sends the second control and management information to the first NP die 21. When the processing and switching die 10 is configured to send the second control and management information to the second NP die 22, the first NP die 21 may control the selector switch in the first NP die 21 to connect the second selection end Q2 corresponding to the second NP die 22, and the second NP die 22 may control the selector switch in the second NP die 22 to connect the connection end Q0, so that the processing and switching die 10 sends the second control and management information to the second NP die 22 through the first NP die 21.

Optionally, in addition to the selector switch, the plurality of NP dies 20 may further include another functional unit. For example, the first NP die 21 and the second NP die 22 may further include a media access control (media access control) aggregation (aggregation) unit, a network processor (network processor, NP), and a traffic manager (traffic manager, TM). The media access control aggregation unit may be referred to as an MAG for short. The MAG may be configured to: sense an optical signal or an electrical signal, forward the optical signal or the electrical signal as a data frame (namely, a packet), and perform validity check on the data frame. Uplink processing of the NP may include packet parsing, data stream analysis, packet forwarding, mapping a MAC/IP address to a TM queue number, and the like. Downlink processing of the NP may include packet encapsulation, egress processing, and the like. The TM may be configured to: provide functions such as large-capacity memory, congestion avoidance, traffic shaping, multi-level traffic scheduling, and traffic congestion control, and map the TM queue number to an identifier of a destination NP die.

In addition, in actual application, in addition to the first NP die 21 and the second NP die 22, the plurality of NP dies 20 may further include more other NP dies. In both FIG. 11 and FIG. 12, an example in which the plurality of NP dies 20 include eight NP dies, and each NP die includes a selector switch, a MAG, an NP, and a TM is used for description.

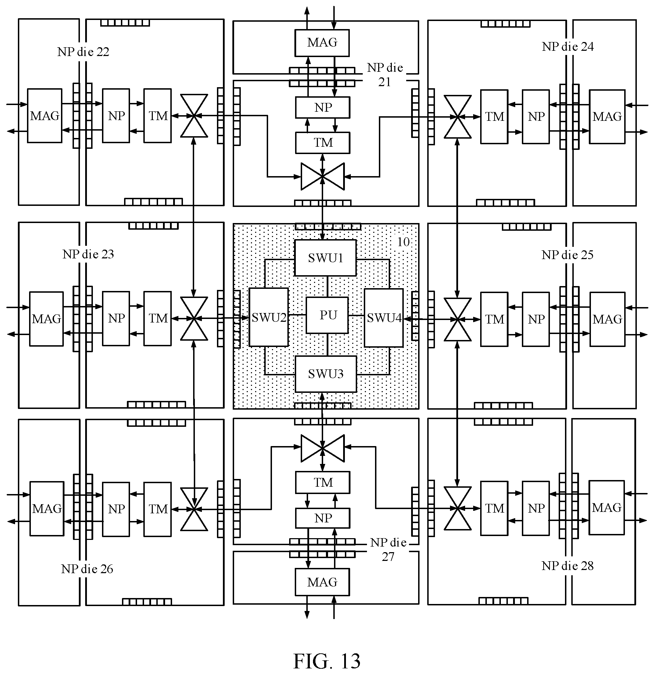

Optionally, when the NP die includes a plurality of different functional units such as the selector switch, the media access control aggregation unit MAG, the network processor NP, and the traffic manager TM, the NP die may alternatively be split into a plurality of different dies, and each die is configured to correspond to the foregoing one or more functional units. For example, with reference to FIG. 11, as shown in FIG. 13, each NP die may include two dies, and the two dies include a die corresponding to the MAG, and a die that corresponds to the NP, the TM, and the selector switch.

In embodiments of this application, structures of the plurality of NP dies may be the same or different, and corresponding processes may be the same or different. When the structures of the plurality of NP dies are the same, the plurality of NP dies may be a plurality of completely same NP dies obtained through one tape-out process or same tape-out processes, NP dies at different locations in the communication chip may be obtained by configuring and rotating the plurality of NP dies. In this way, development costs of the NP dies can be greatly reduced.

Similarly, the foregoing processing and switching die 10 may also be split into a plurality of different dies. Processes used by different dies may be the same or different. For example, an input/output interface used for communication may be integrated into an independent die, and another function may be integrated into another die. This is not specifically limited in embodiments of this application.

Further, optionally, the control and management function implemented by the at least one processing unit 11 in the processing and switching die 10 provided above is merely an example. In actual application, control and management functions in the LPU and the SFU may be offloaded to only the at least one processing unit in the processing and switching die 10, and a control and management function in the MPU is retained.

In addition, the at least one processing unit 11 in the foregoing processing and switching die 10 may include a CPU, and may further include a DPU, a DPU, a DSP, an AI service-related processing unit, and the like. In addition to the modules such as the MAG, the NP, and the TM, the NP die may also be deployed with modules corresponding to capabilities such as flexible Ethernet (flexible ethernet, FlexE) and media access control security (media access control security, MACSEC) according to a requirement, and may further be deployed with the DPU, the DPU, the DSP, and the AI service-related processing unit, and the like according to a scenario requirement.

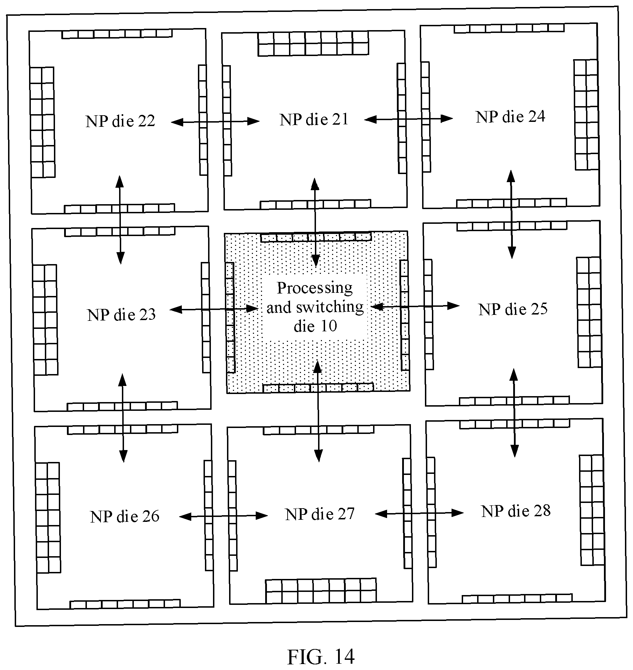

An embodiment of this application further provides a communication chip. As shown in FIG. 14, the communication chip includes the at least one processing and switching die 10 provided above and a plurality of NP dies 20 coupled to the at least one processing and switching die 10. In FIG. 14, an example in which the at least one processing and switching die 10 includes one processing and switching die 10, the plurality of NP dies 20 include eight NP dies, and the eight NP dies may be respectively represented as an NP die 21 to an NP die 28 is used for description.

Each of the at least one processing and switching die 10 may be configured to: control and manage a switching unit of the processing and switching die, and control and manage a part or all of the plurality of NP dies 20. For example, each processing and switching die may be configured to: control and manage one or more NP dies that are directly or indirectly coupled to the processing and switching die 10.

Optionally, when the at least one processing and switching die 10 includes a plurality of processing and switching dies, any one of the plurality of processing and switching dies may reuse another processing and switching die.

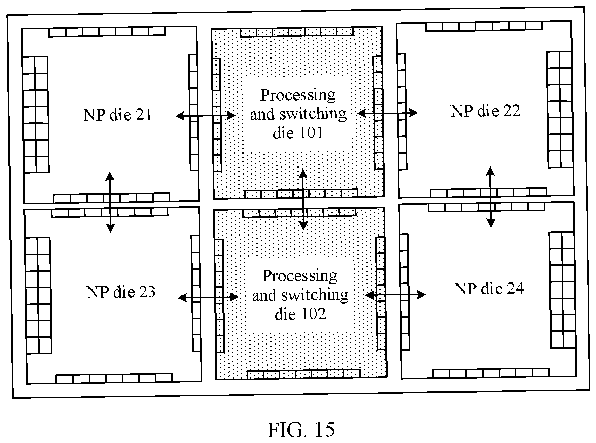

In a possible embodiment, as shown in FIG. 15, the at least one processing and switching die 10 includes a first processing and switching die 101 and a second processing and switching die 102, and the first processing and switching die 101 is directly connected to the second processing and switching die 102. For example, the plurality of NP dies 20 may include four NP dies, and the four NP dies may be respectively represented as an NP die 21 to an NP die 24.

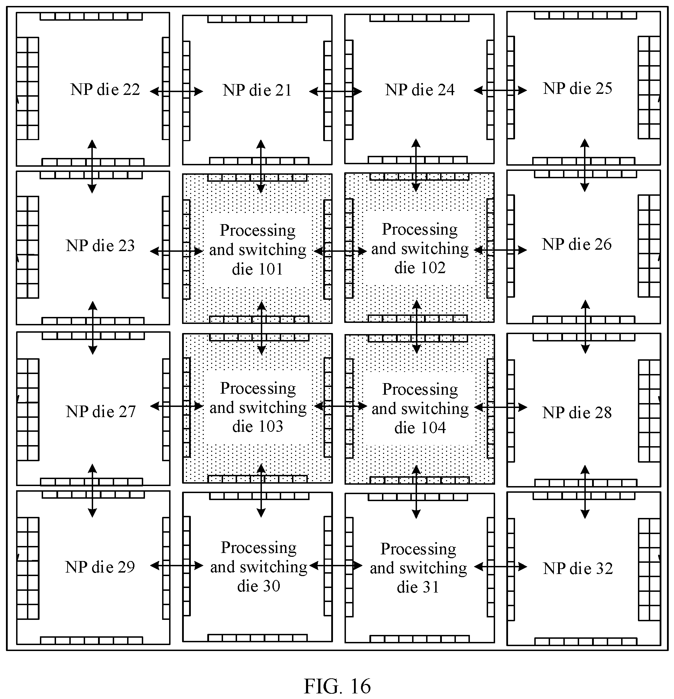

In another possible embodiment, as shown in FIG. 16, the at least one processing and switching die 10 includes four processing and switching dies, the four processing and switching dies are respectively represented as a processing and switching die 101 to a processing and switching die 104, and any two adjacent processing and switching dies in the four processing and switching dies are coupled. For example, the plurality of NP dies 20 may include 12 NP dies, and the 12 NP dies may be respectively represented as an NP die 21 to an NP die 32.

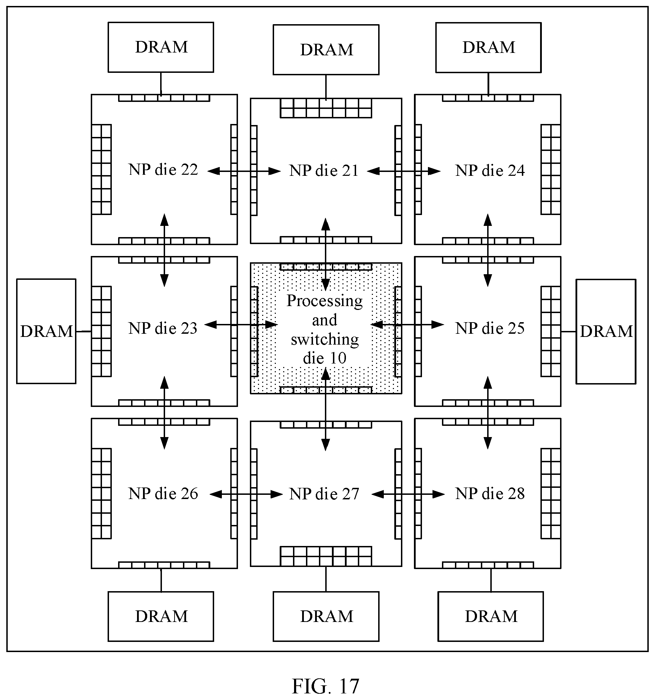

Further, the communication chip may further include at least one storage die, and any one of the plurality of NP dies is connected to one or more of the at least one storage die. For example, with reference to FIG. 14, as shown in FIG. 17, the at least one storage die includes eight storage dies, and each of the eight NP dies is connected to one storage die. Optionally, a storage medium type of the storage die includes but is not limited to: a dynamic random access memory (dynamic random access memory, DRAM), a static random access memory (static random access memory, SRAM), a ferroelectric random access memory (ferroelectric random access memory, FeRAM), a magnetic random access memory (magnetic random access memory, MRAM), or the like. In the figure, an example in which the storage medium type of the storage die is the DRAM is used for description.

When the at least one storage die includes the plurality of storage dies, storage medium types of the plurality of storage dies may be the same or different. When one NP die is coupled to the plurality of storage dies, the storage medium types of the plurality of storage dies correspondingly coupled to the NP die may be the same or different. This is not specifically limited in embodiments of this application.

Optionally, the storage dies may be connected through 3D stacking, or may be connected through an external connection, for example, through 2.5D packaging, board-level interconnection, or a hybrid manner of 2.5D and 3D. This is not specifically limited in embodiments of this application.

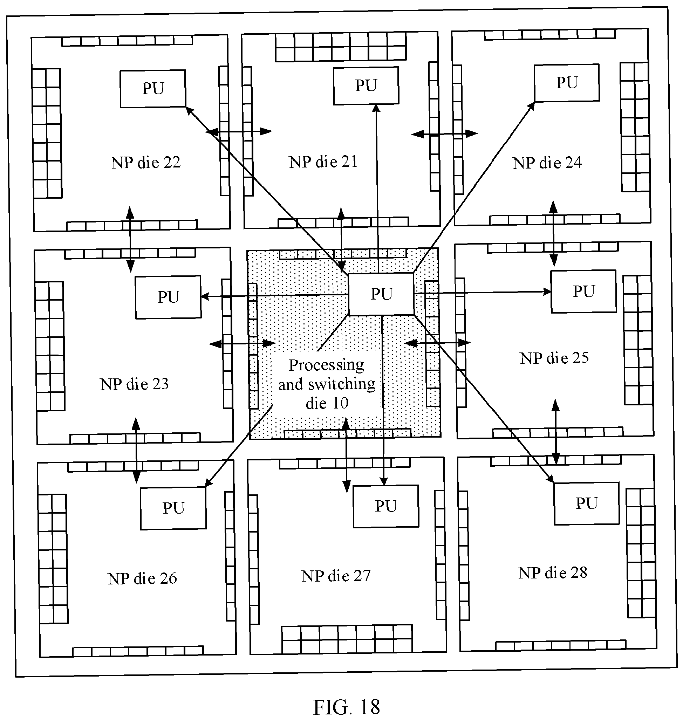

In another embodiment of this application, a communication chip is further provided. As shown in FIG. 18, the communication chip may include a processing and switching die 10 and a plurality of NP dies 20 (for example, an NP die 21 to an NP die 28). The processing and switching die 10 may include a processing unit PU and a plurality of switching units. Each of the plurality of NP dies may also include a processing unit PU. The processing unit PU in the processing and switching die 10 and the processing unit PUs in the plurality of NP dies may be jointly configured to: control and manage the communication chip. The control and management manner may be referred to as a processing unit multi-level management and compute resource exclusive manner.

In a possible example, the processing unit PU in the processing and switching die 10 may be configured to: control and manage the plurality of switching units, and the processing unit PU in the plurality of NP dies may be configured to: control and manage the plurality of NP dies. Optionally, the processing and switching die 10 may also manage the processing unit PU in the plurality of NP dies.

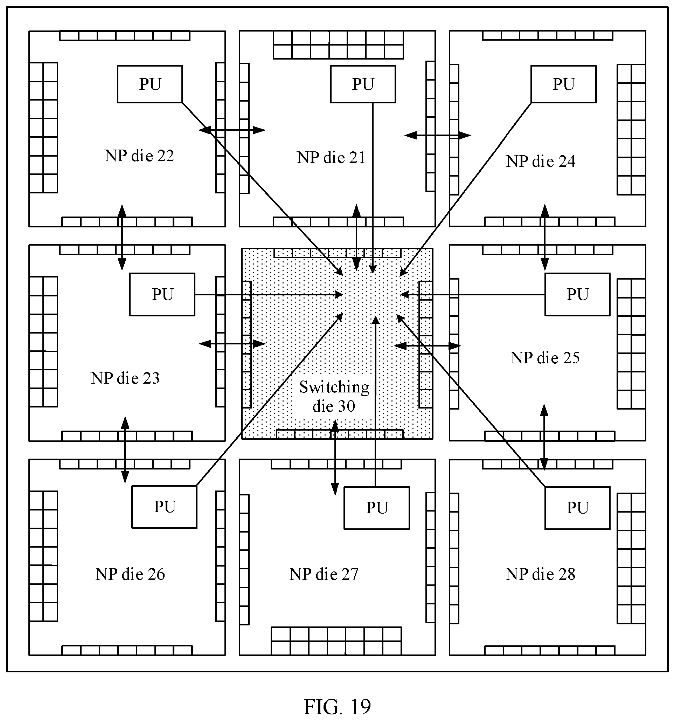

In still another embodiment of this application, a communication chip is further provided. As shown in FIG. 19, the communication chip may include a switching die 30 and a plurality of NP dies 20 (for example, an NP die 21 to an NP die 28). The switching die 30 may include a plurality of switching units. Each of the plurality of NP dies may also include a processing unit PU. The processing units PUs in the plurality of NP dies may be jointly configured to: control and manage the communication chip. The control and management manner may be referred to as a processing unit single-level management and compute resource distributed exclusive manner.

In a possible example, the processing units PUs in the plurality of NP dies may be configured to: control and manage the plurality of switching units and the plurality of NP dies. For example, a processing unit PU in any one of the plurality of NP dies may be configured to: control and manage the NP die of the processing unit PU. Further, the processing unit PU may be further configured to: control and manage another NP die and a switching unit in the switching die 30. Optionally, processing units PU in any two adjacent NP dies in the plurality of NP dies may further communicate with each other, for example, be configured to: transmit control and management information.

It may be understood that the foregoing detailed descriptions of control and management of the processing and switching die 10 may be correspondingly cited in the embodiment corresponding to the communication chip. Details are not described herein again in embodiments of this application.

In view of this, an embodiment of this application further provides a data processing apparatus. The data processing apparatus includes a backplane and at least one communication chip disposed on the backplane. The communication chip may be any one of the foregoing communication chips. Optionally, the data switching apparatus may be a router, a switching box, a switching frame, a switch, or the like. This is not specifically limited in embodiments of this application.

It may be understood that the foregoing detailed descriptions of the processing and switching die and the NP die may be correspondingly cited in embodiments corresponding to the communication chip and the data processing apparatus. Details are not described herein again in embodiments of this application.

In view of this, an embodiment of this application further provides a control and management method. The method may be applied to a communication chip. The communication chip includes a processing and switching die and a plurality of network processing dies coupled to the processing and switching die. The processing and switching die includes at least one processing unit and a plurality of switching units. The method includes: The at least one processing unit sends first control and management information to the plurality of switching units; and the at least one processing unit sends second control and management information to the plurality of network processing dies through the plurality of switching units.

The control and management information may include control and management information of a control plane and/or a management plane. For example, the at least one processing unit may be configured to: control and manage functions such as protocol processing, service processing, route computation, packet forwarding, and traffic statistics collection of the plurality of switching units and the plurality of NP dies, and may be further configured to: control and manage functions such as running status monitoring, environment monitoring, log and alarm information processing, system loading, and system upgrade of the communication chip.

For example, the first control and management information may specifically include at least one of the following information: first configuration information used to configure the switching unit, transmission control information of a data packet, and device management information sent based on a plurality of pieces of received device status information. The transmission control information of the data packet may be obtained based on a configuration, or may be generated based on triggering of a signaling packet. The signaling packet may be received by the NP die from the outside and forwarded to the processing unit PU through the switching unit. The plurality of pieces of device status information may be status information of devices monitored by the NP die, a fan module coupled to the NP die, a power supply module, and the like. The device status information may also be referred to as maintenance information.

For example, the second control and management information may include at least one of the following information: second configuration information used to configure the NP die, transmission control information of a data packet, and device management information sent based on a plurality pieces of received device status information. The transmission control information of the data packet may be obtained based on a configuration, or may be generated based on triggering of a signaling packet. The signaling packet may be received by the NP die from the outside and forwarded to the processing unit PU through the switching unit. The plurality of pieces of device status information may be status information of devices monitored by the NP die, a fan module coupled to the NP die, a power supply module, and the like. The device status information may also be referred to as maintenance information.

Optionally, in an example, the first control and management information of each switching unit includes first configuration information used to configure the switching unit, and the second control and management information of each network processing die includes second configuration information used to configure the network processing die.

Optionally, in another example, the second control and management information further includes transmission control information of a data packet, and the method further includes: Any one of the plurality of network processing dies sends a signaling packet to the at least one processing unit through the plurality of switching units. The signaling packet is used to trigger the at least one processing unit to send the transmission control information.

Optionally, in another example, the second control and management information further includes device management information, and the method further includes: Any one of the plurality of network processing dies sends the device status information to the at least one processing unit through the plurality of switching units. The device status information is used by the at least one processing unit to send the device management information.

Further, in a possible embodiment, the at least one processing unit includes one processing unit, the plurality of switching units are all coupled to the processing unit, and a first switching unit in the plurality of switching units is directly connected to a first network processing die in the plurality of network processing dies. That the at least one processing unit sends the second control and management information to the plurality of network processing dies through the plurality of switching units includes: The processing unit sends the second control and management information to the first network processing die through the first switching unit.

In another possible embodiment, a second network processing die in the plurality of network processing dies is directly connected to the first network processing die, and the second network processing die is not directly connected to the plurality of switching units. That the at least one processing unit sends the second control and management information to the plurality of network processing dies through the plurality of switching units further includes: The processing unit sends the second control and management information to the second network processing die through the first switching unit and the first network processing die.

In another possible embodiment, a second switching unit in the plurality of switching units is directly connected to a third network processing die in the plurality of network processing dies, and the third network processing die is directly connected to the second network processing die. That the at least one processing unit sends the second control and management information to the plurality of network processing dies through the plurality of switching units further includes: The processing unit sends the second control and management information to the second network processing die through the second switching unit and the third network processing die.

Further, in a possible embodiment, the at least one processing unit includes a plurality of processing units, the plurality of processing units and the plurality of switching units are in a one-to-one correspondence and are integrated into a plurality of processing and switching units, and any two of the plurality of processing and switching units are coupled. That the at least one processing unit sends the second control and management information to the plurality of network processing dies through the plurality of switching units includes: The plurality of processing and switching units send the second control and management information to the plurality of network processing dies.

In another possible embodiment, a first processing and switching unit in the plurality of processing and switching units is directly connected to a first network processing die in the plurality of network processing dies. That the plurality of processing and switching units send the second control and management information to the plurality of network processing dies includes: The first processing and switching unit sends the second control and management information to the first network processing die.

In still another possible embodiment, a second network processing die in the plurality of network processing dies is directly connected to the first network processing die, and the second network processing die is not directly connected to the plurality of processing and switching units. That the plurality of processing and switching units send the second control and management information to the plurality of network processing dies further includes: The first processing and switching unit sends the second control and management information to the second network processing die through the first network processing die.

Optionally, a second processing and switching unit in the plurality of processing and switching units is directly connected to a third network processing die in the plurality of network processing dies, and the third network processing die is directly connected to the second network processing die. That the plurality of processing and switching units send the second control and management information to the plurality of network processing dies further includes: The second processing and switching unit sends the second control and management information to the second network processing die through the third network processing die.

Optionally, the plurality of processing and switching units include the first processing and switching unit and the second processing and switching unit. The at least one processing unit sends the first control and management information to the plurality of switching units includes: A processing unit in the first processing and switching unit sends the first control and management information to a switching unit in the second processing and switching unit.

An embodiment of this application provides a control and management method that is used to control and manage a network-centric computing (that is, a network capability is primary and computational power is auxiliary) communication chip. The communication chip includes a processing and switching die and a plurality of NP dies. In the method, the processing and switching die may be configured to: control and manage the communication chip and provide a computing capability. The plurality of NP dies may be configured to provide capabilities such as a network interface and network processing. Therefore, the communication chip and the control and management method provided in embodiments of this application are applicable to a network device based on a network processing capability. In comparison with the conventional technology, a quantity of processing units in a network device can be greatly reduced, device costs are reduced, device energy efficiency is improved, and heat dissipation and power supply costs and deployment space are reduced, to achieve green, low-carbon, and sustainable development.

All or some of the methods or apparatuses provided in embodiments of this application may be implemented through software, hardware, or a combination thereof. When software is used to implement the embodiments, all or a part of the embodiments may be implemented in a form of computer program product. The computer program product includes one or more computer instructions. When the computer program instructions are loaded and executed on a computer, all or a part of the procedures or functions described in embodiments of this application are generated. The computer may be a general-purpose computer, a dedicated computer, a computer network, a network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium may be any medium accessible by the computer, or a data storage device, for example, a server or a data center, integrating one or more media. The medium may be a magnetic medium (for example, a floppy disk, a hard disk, or a magnetic tape), an optical medium (for example, an optical disc), a semiconductor medium (for example, a solid-state drive (solid state disk, SSD)), or the like.

According to another aspect of this application, a computer-readable storage medium is provided. The computer-readable storage medium includes computer instructions. When the computer instructions are run by a device, the device is enabled to perform the steps for the processing and switching die in the control and management method provided in the foregoing method embodiments.

According to another aspect of this application, a computer-readable storage medium is further provided. The computer-readable storage medium includes computer instructions. When the computer instructions are run by a device, the device is enabled to perform the steps for the NP die in the control and management method provided in the foregoing method embodiments.

According to another aspect of this application, a computer program product including instructions is provided. When the computer program product runs on a computer, the computer is enabled to perform the steps of the processing and switching die in the control and management method provided in the foregoing method embodiments.

According to another aspect of this application, a computer program product including instructions is provided. When the computer program product runs on a computer, the computer is enabled to perform the steps of the NP die in the control and management method provided in the foregoing method embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A processing and switching die, wherein the processing and switching die is configured to be coupled to a plurality of network processing dies; and
the processing and switching die comprises at least one processing unit and a plurality of switching units, and the at least one processing unit is configured to: control and manage the plurality of switching units and the plurality of network processing dies.

2. The processing and switching die according to claim 1, wherein the at least one processing unit comprises one processing unit, and the plurality of switching units are all coupled to the processing unit;
the processing unit is configured to send first control and management information to the plurality of switching units; and
the processing unit is further configured to send second control and management information to the plurality of network processing dies through the plurality of switching units.

3. The processing and switching die according to claim 2, wherein a first switching unit in the plurality of switching units is directly connected to a first network processing die in the plurality of network processing dies; and
the processing unit is further configured to send the second control and management information to the first network processing die through the first switching unit.

4. The processing and switching die according to claim 3, wherein a second network processing die in the plurality of network processing dies is directly connected to the first network processing die, and the second network processing die is not directly connected to the plurality of switching units; and
the processing unit is further configured to send the second control and management information to the second network processing die through the first switching unit and the first network processing die.

5. The processing and switching die according to claim 4, wherein a second switching unit in the plurality of switching units is directly connected to a third network processing die in the plurality of network processing dies, and the third network processing die is directly connected to the second network processing die; and
the processing unit is further configured to send the second control and management information to the second network processing die through the second switching unit and the third network processing die.

6. The processing and switching die according to claim 5, wherein
the processing unit is further configured to: distribute and send the second control and management information to the second network processing die through the first switching unit and the second switching unit.

7. The processing and switching die according to claim 1, wherein the at least one processing unit comprises a plurality of processing units, the plurality of processing units and the plurality of switching units are in a one-to-one correspondence and are integrated into a plurality of processing and switching units, and any two of the plurality of processing and switching units are coupled; and
the plurality of processing and switching units are configured to send second control and management information to the plurality of network processing dies.

8. The processing and switching die according to claim 7, wherein a first processing and switching unit in the plurality of processing and switching units is directly connected to a first network processing die in the plurality of network processing dies; and
the first processing and switching unit is configured to send the second control and management information to the first network processing die.

9. The processing and switching die according to claim 8, wherein a second network processing die in the plurality of network processing dies is directly connected to the first network processing die, and the second network processing die is not directly connected to the plurality of processing and switching units; and
the first processing and switching unit is further configured to send the second control and management information to the second network processing die through the first network processing die.

10. The processing and switching die according to claim 9, wherein a second processing and switching unit in the plurality of processing and switching units is directly connected to a third network processing die in the plurality of network processing dies, and the third network processing die is directly connected to the second network processing die; and
the second processing and switching unit is further configured to send the second control and management information to the second network processing die through the third network processing die.

11. The processing and switching die according to any one of claims 7 to 10, wherein the plurality of processing and switching units comprise the first processing and switching unit and the second processing and switching unit; and
a processing unit in the first processing and switching unit is configured to send the second control and management information to a processing unit in the second processing and switching unit.

12. The processing and switching die according to any one of claims 7 to 11, wherein the plurality of processing and switching units comprise the first processing and switching unit and the second processing and switching unit; and
the processing unit in the first processing and switching unit is further configured to send first control and management information to a switching unit in the second processing and switching unit.

13. The processing and switching die according to any one of claims 1 to 12, wherein the control and management comprises control and management of a control plane and/or a management plane.

14. A communication chip, wherein the communication chip comprises at least one processing and switching die and a plurality of network processing dies coupled to the at least one processing and switching die, and the at least one processing and switching die is the processing and switching die according to any one of claims 1 to 13.

15. The communication chip according to claim 14, wherein the at least one processing and switching die comprises a first processing and switching die and a second processing and switching die, and the first processing and switching die is directly connected to the second processing and switching die.

16. A data processing apparatus, wherein the data processing apparatus comprises a backplane and at least one communication chip disposed on the backplane, and the communication chip is the communication chip according to claim 14 or 15.

17. A control and management method, applied to a communication chip, wherein the communication chip comprises a processing and switching die and a plurality of network processing dies coupled to the processing and switching die, the processing and switching die comprises at least one processing unit and a plurality of switching units, and the method comprises:
sending, by the at least one processing unit, first control and management information to the plurality of switching units; and
sending, by the at least one processing unit, second control and management information to the plurality of network processing dies through the plurality of switching units.

18. The method according to claim 17, wherein the first control and management information of each switching unit comprises first configuration information used to configure the switching unit, and the second control and management information of each network processing die comprises second configuration information used to configure the network processing die.

19. The method according to claim 17 or 18, wherein the second control and management information further comprises transmission control information of a data packet, and the method further comprises:
sending, by any one of the plurality of network processing dies, a signaling packet to the at least one processing unit through the plurality of switching units, wherein the signaling packet is used to trigger the at least one processing unit to send the transmission control information.

20. The method according to any one of claims 17 to 19, wherein the second control and management information further comprises device management information, and the method further comprises:
sending, by any one of the plurality of network processing dies, device status information to the at least one processing unit through the plurality of switching units, wherein the device status information is used by the at least one processing unit to send the device management information.

21. The method according to any one of claims 17 to 20, wherein the at least one processing unit comprises one processing unit, the plurality of switching units are all coupled to the processing unit, and a first switching unit in the plurality of switching units is directly connected to a first network processing die in the plurality of network processing dies; and sending, by the at least one processing unit, the second control and management information to the plurality of network processing dies through the plurality of switching units comprises:
sending, by the processing unit, the second control and management information to the first network processing die through the first switching unit.

22. The method according to claim 21, wherein a second network processing die in the plurality of network processing dies is directly connected to the first network processing die, and the second network processing die is not directly connected to the plurality of switching units; and sending, by the at least one processing unit, the second control and management information to the plurality of network processing dies through the plurality of switching units further comprises:
sending, by the processing unit, the second control and management information to the second network processing die through the first switching unit and the first network processing die.

23. The method according to claim 21 or 22, wherein a second switching unit in the plurality of switching units is directly connected to a third network processing die in the plurality of network processing dies, and the third network processing die is directly connected to the second network processing die; and sending, by the at least one processing unit, the second control and management information to the plurality of network processing dies through the plurality of switching units further comprises:
sending, by the processing unit, the second control and management information to the second network processing die through the second switching unit and the third network processing die.

24. The method according to any one of claims 17 to 20, wherein the at least one processing unit comprises a plurality of processing units, the plurality of processing units and the plurality of switching units are in a one-to-one correspondence and are integrated into a plurality of processing and switching units, and any two of the plurality of processing and switching units are coupled; and sending, by the at least one processing unit, the second control and management information to the plurality of network processing dies through the plurality of switching units comprises:
sending, by the plurality of processing and switching units, the second control and management information to the plurality of network processing dies.

25. The method according to claim 24, wherein a first processing and switching unit in the plurality of processing and switching units is directly connected to a first network processing die in the plurality of network processing dies; and sending, by the plurality of processing and switching units, the second control and management information to the plurality of network processing dies comprises:
sending, by the first processing and switching unit, the second control and management information to the first network processing die.

26. The method according to claim 25, wherein a second network processing die in the plurality of network processing dies is directly connected to the first network processing die, and the second network processing die is not directly connected to the plurality of processing and switching units; and sending, by the plurality of processing and switching units, the second control and management information to the plurality of network processing dies further comprises:
sending, by the first processing and switching unit, the second control and management information to the second network processing die through the first network processing die.

27. The method according to claim 25 or 26, wherein a second processing and switching unit in the plurality of processing and switching units is directly connected to a third network processing die in the plurality of network processing dies, and the third network processing die is directly connected to the second network processing die; and sending, by the plurality of processing and switching units, the second control and management information to the plurality of network processing dies further comprises:
sending, by the second processing and switching unit, the second control and management information to the second network processing die through the third network processing die.

28. The method according to any one of claims 24 to 27, wherein the plurality of processing and switching units comprise the first processing and switching unit and the second processing and switching unit; and sending, by the at least one processing unit, the first control and management information to the plurality of switching units comprises:
sending, by a processing unit in the first processing and switching unit, the first control and management information to a switching unit in the second processing and switching unit.

29. The method according to any one of claims 17 to 28, wherein the control and management information comprises control and management information of a control plane and/or a management plane.
